# FASCICULE DE BREVET EUROPEEN

(11) **EP 2 180 396 B1**
(45) Date de publication et mention de la délivrance du brevet: **01.05.2013**
(21) Numéro de dépôt: 09173995.3
(22) Date de dépôt: 24.10.2009
(51) Int. Cl.: G06F 3/01, G06F 3/033, B60K 37/06

(54) **Dispositif de commande à retour haptique**
Steuervorrichtung mit haptischer Rückmeldung
Control device with haptic feedback

(30) Priorité: 24.10.2008 FR 0805894
(43) Date de publication de la demande: 28.04.2010
(73) Titulaire: DAV, 94000 Creteil (FR)
(72) Inventeur: Laurent, Patrice, 74106 Annemasse (FR); Dunoyer, Aymeric, 74106 Annemasse (FR)
(74) Mandataire: Croonenbroek, Thomas Jakob

(56) Documents cités:
- EP-A- 1 562 103
- US-A1- 2003 038 776
- US-A1- 2005 017 947
- US-A1- 2006 256 075

## Description

La présente invention concerne un dispositif de commande pour véhicule automobile, permettant notamment de transmettre un retour haptique à un utilisateur, tel qu'un retour vibratoire.

Dans le domaine automobile, des dispositifs de commande multifonction, réalisés par exemple sous la forme d'un joystick ou d'un bouton rotatif, sont de plus en plus utilisés pour commander des systèmes électriques ou électroniques, tels qu'un système de climatisation, un système audio ou encore un système de navigation.

De tels dispositifs peuvent être associés à un écran d'affichage et permettre une navigation dans des menus déroulants comportant différentes commandes relatives aux systèmes à commander.

Pour augmenter le confort ergonomique, l'utilisation d'une technologie à capteur à surface tactile au niveau de la surface de commande de tels dispositifs de commande peut être considérée comme un développement intéressant.

Lorsqu'un utilisateur exerce une pression sur la surface tactile d'un tel capteur, on peut mesurer la pression appliquée et/ou déterminer la localisation de l'endroit où la pression est exercée par application d'une tension électrique adaptée. Dans ce cas, un appui de l'utilisateur sur la surface tactile est par exemple associé à la sélection d'une commande.

En outre, pour signaler à l'utilisateur que sa commande a bien été prise en compte, notamment en conduite de nuit ou lors d'une manipulation en aveugle, il est important que l'utilisateur ait un retour haptique de manière à rester concentré sur la route.

Pour cela, on connaît déjà des dispositifs de commande à retour haptique comportant des actionneurs, tels que des actionneurs électromagnétiques, reliés une plaque de support du capteur à surface tactile du dispositif de commande pour transmettre un mouvement de vibration à la surface tactile, de manière que l'utilisateur perçoive un retour haptique l'informant que sa commande a bien été prise en compte.

En outre, on peut envisager des retours haptiques selon des directions différentes en fonction des commandes de l'utilisateur. Pour cela, certains dispositifs connus utilisent des actionneurs différents pour chaque direction correspondant à une commande de l'utilisateur.

Par exemple, le document US 2006/0256075 A1 divulgue l'utilisation de quatre actionneurs reliés à une plaque pour générer un retour haptique. Ce document propose aussi de fixer ensemble deux ou plusieurs ationneurs afin de générer des effets haptiques et d'arranger des actionneurs de façon à entraîner une plaque selon plusieurs directions.

Toutefois, la multiplication du nombre d'actionneurs pour générer des retours haptiques selon des directions différentes implique un encombrement important du dispositif de commande, ce qui peut limiter leur mise en place dans un véhicule automobile où les volumes disponibles sont de plus en plus restreints.

L'invention a donc pour objectif de proposer un dispositif de commande à retour haptique amélioré ne présentant pas les inconvénients de l'art antérieur.

À cet effet, l'invention a pour objet un dispositif de commande à retour haptique comprenant :
- une plaque de support présentant une forme parallélépipédique et configurée pour transmettre un retour haptique à un utilisateur,
- un capteur à surface tactile porté par ladite plaque et configuré pour détecter un appui sur la surface tactile,
- deux actionneurs fixés à ladite plaque avec leurs axes d'entraînement sensiblement parallèles entre eux et à une bordure de ladite plaque, lesdits actionneurs étant configurés pour entraîner ladite plaque en translation suivant une direction d'entraînement commune de manière à générer le retour haptique lorsqu'un appui est détecté,
**caractérisé en ce que** les deux actionneurs sont disposés diagonalement sur ladite plaque de part et d'autre du centre de ladite plaque, de manière à générer un retour haptique bidirectionnel.

Ainsi, un tel agencement de deux actionneurs unidirectionnels permet d'obtenir un retour haptique suivant deux directions dans le plan de ladite plaque. Il n'est alors plus nécessaire d'utiliser des actionneurs différents pour générer des retours haptiques dans des directions différentes.

Le dispositif de commande peut en outre comporter une ou plusieurs caractéristiques suivantes, prises séparément ou en combinaison :
- le retour haptique bidirectionnel est généré suivant la direction d'entraînement commune et suivant une direction perpendiculaire à la direction d'entraînement commune, dans le plan de ladite plaque,
- ledit dispositif comporte au moins un actionneur électromagnétique comportant une partie fixe reliée à un châssis dudit dispositif et au moins une partie mobile dans un entrefer de la partie fixe,
- ledit dispositif comporte des moyens de liaison élastiques entre ladite partie fixe et ladite partie mobile,
- ledit dispositif comporte une unité de pilotage configurée pour transmettre un signal de commande commun aux deux actionneurs,
- ledit signal de commande est émis sur une bande de fréquence prédéterminée, de sorte que le retour haptique généré soit homogène suivant la direction d'entraînement et suivant ladite direction perpendiculaire,
- ledit signal de commande est émis sur une fréquence sensiblement égale à 110 Hertz,
- ledit dispositif comporte un moyen de reprise d'effort disposé entre un châssis dudit dispositif et ladite plaque,
- le moyen de reprise d'effort comporte deux plots élastiques fixés sur ledit châssis, de manière à être disposés sur la diagonale opposée par rapport aux deux actionneurs.

D'autres caractéristiques et avantages de l'invention ressortiront de la description suivante, donnée à titre d'exemple, sans caractère limitatif, en regard des dessins annexés sur lesquels :
- la figure 1 représente partiellement et de façon schématique un dispositif de commande à retour haptique, et
- la figure 2 est un graphique de courbes de mesure des accélérations de vibrations générées selon deux directions en fonctions des bandes de fréquences sur lesquelles est émis un signal de commande des actionneurs du dispositif de la figure 1.

L'invention concerne un dispositif de commande 1 à retour haptique, par exemple pour un tableau de commande de véhicule automobile, ou encore pour console centrale de véhicule automobile, permettant de commander des systèmes électriques ou électroniques du véhicule, et pouvant transmettre un retour haptique à un utilisateur ayant par exemple modifié ou sélectionné une commande de manière à assurer à l'utilisateur la prise en compte de la commande modifiée ou sélectionnée.

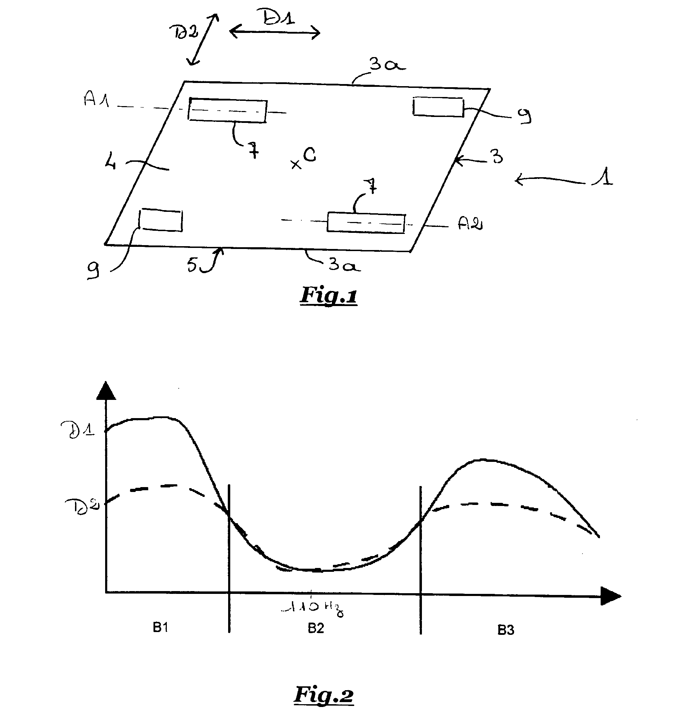

Comme l'illustre la figure 1, le dispositif de commande 1 comporte :
- une plaque 3 de support, dont on a représenté la face arrière 4, présentant une forme parallélépipédique et configurée pour transmettre un retour haptique à un utilisateur, par exemple à un doigt d'un utilisateur,
- un capteur 5 à surface tactile porté par une face avant (non représentée) de la plaque 3 et configuré pour détecter un appui de l'utilisateur sur la surface tactile,
- deux actionneurs 7 reliés à la face arrière 4 de la plaque 3 pour appliquer un mouvement de vibration à la plaque 3 lorsqu'un appui est détecté, de manière à générer le retour haptique à l'utilisateur.

Le capteur 5 à surface tactile est par exemple un capteur de pression utilisant la technologie FSR pour "Force Sensing Resistor" en anglais, c'est-à-dire utilisant des résistances sensibles à la pression.

On peut également choisir un capteur utilisant une technologie capacitive ou optique pour détecter un appui de l'utilisateur.

De plus, une peau de protection et de décoration peut être disposée sur le capteur 5 à surface tactile.

Les deux actionneurs 7 présentent respectivement un axe d'entraînement A1, A2 parallèles entre eux et parallèles à une bordure 3a de la plaque 3, de manière à entraîner la plaque 3 en translation suivant une direction d'entraînement D1 commune, alternativement dans les deux sens opposés pour générer un retour haptique vibratoire.

Par ailleurs, au moins un des actionneurs 7 peut être électromagnétique. Dans ce cas (non représenté), l'actionneur 7 comprend une partie fixe relié à un châssis du dispositif, et une partie mobile dans un entrefer de la partie fixe, la partie mobile étant reliée à la plaque 3.

La liaison entre la partie fixe et la partie mobile peut être élastique, par exemple à l'aide d'un ressort agencé entre la partie mobile et la partie fixe, ou encore par un boîtier de l'actionneur 7 partiellement élastique au niveau de la partie mobile.

On peut prévoir également un actionneur de type "voice coil" en anglais, un actionneur piézoélectrique ou encore un actionneur comportant une masselotte entraînée en mouvement par un moteur électrique.

Pour obtenir un retour haptique homogène, les deux actionneurs 7 peuvent être agencés de façon similaire entre la plaque 3 et un châssis fixe (non représenté) du dispositif.

En outre, les deux actionneurs 7 sont disposés diagonalement sur la plaque 3 de part et d'autre du centre C de la plaque 3. Avec cette configuration, la Demanderesse a constaté que le retour haptique généré est bidirectionnel.

Plus précisément, le retour haptique bidirectionnel est généré suivant la direction d'entraînement D1 commune et suivant une direction D2 perpendiculaire à la direction d'entraînement commune dans le plan de la plaque 3.

Le dispositif comporte en outre, une unité de pilotage (non représentée) reliée au capteur 5 et aux actionneurs 7 pour fournir un signal de commande aux actionneurs 7 de façon à entraîner la plaque 3 en mouvement, lorsqu'un appui est détecté sur la surface tactile.

Le signal de commande est alors commun aux deux actionneurs 7. Selon la bande de fréquence sur laquelle ce signal de commande commun est émis, le retour haptique généré est ressenti différemment par l'utilisateur.

En référence à la figure 2, on a mesuré à l'aide d'accéléromètres, les accélérations des vibrations selon la direction d'entraînement commune D1 (ligne continue) et selon la direction perpendiculaire D2 (ligne pointillée).

Ainsi, lorsque le signal commun est émis sur la bande de fréquence B2 aux alentours de la fréquence de résonance du dispositif, on constate que les accélérations suivant les deux directions D1,D2 sont du même ordre. Cette fréquence de résonance est par exemple de 110 Hertz pour un tel dispositif de commande. L'utilisateur perçoit alors un retour haptique homogène suivant la direction d'entraînement D1 et suivant la direction perpendiculaire D2.

Au contraire, lorsque le signal commun est émis sur une bande de fréquence B1 ou B3 ne contenant pas la fréquence de résonance du dispositif, on constate que les accélérations suivant les deux directions D1,D2 diffèrent. Dans ce cas, l'utilisateur perçoit un retour haptique différent suivant la direction d'entraînement D1 et suivant la direction perpendiculaire D2.

Par ailleurs, le dispositif comporte un moyen de reprise d'effort 9 disposé entre un châssis du dispositif (non représenté) et la plaque 3. Ce moyen de reprise d'effort 9 comporte deux plots élastiques fixés sur le châssis, de manière à être disposés sur la diagonale opposée par rapport aux deux actionneurs 7.

On comprend donc qu'un tel agencement des actionneurs 7 par rapport à la plaque 3 permet d'obtenir selon le signal de commande, un retour haptique homogène suivant deux directions dans le plan de la plaque 3.

## Revendications

1. Dispositif de commande à retour haptique comprenant :
- une plaque de support (3) présentant une forme parallélépipédique et configurée pour transmettre un retour haptique à un utilisateur,
- un capteur (5) à surface tactile porté par ladite plaque et configuré pour détecter un appui sur la surface tactile,
- deux actionneurs (7) fixés à ladite plaque (3) avec leurs axes d'entraînement (A1,A2) sensiblement parallèles entre eux et à une bordure (3a) de ladite plaque (3), lesdits actionneurs (7) étant configurés pour entraîner ladite plaque (3) en translation suivant une direction d'entraînement (D1) commune dans le plan de ladite plaque (3) de manière à générer le retour haptique lorsqu'un appui est détecté,
**caractérisé en ce que** :
- les deux actionneurs (7) sont disposés diagonalement sur ladite plaque (3) de part et d'autre du centre (C) de ladite plaque (3), de manière à générer un retour haptique bidirectionnel dans le plan de ladite plaque (3), et **en ce que**
- ledit dispositif de commande comporte un moyen de reprise d'effort (9) disposé entre un châssis dudit dispositif et ladite plaque (3), le moyen de reprise d'effort comportant deux plots élastiques (9) fixés sur ledit châssis, de manière à être disposés sur la diagonale opposée par rapport aux deux actionneurs (7).

2. Dispositif selon la revendication 1, **caractérisé en ce que** le retour haptique bidirectionnel est généré suivant la direction d'entraînement (D1) commune et suivant une direction (D2) perpendiculaire à la direction d'entraînement (D1) commune, dans le plan de ladite plaque (3).

3. Dispositif selon l'une quelconque des revendications 1 ou 2, **caractérisé en ce qu'**il comporte au moins un actionneur (7) électromagnétique comportant une partie fixe reliée au châssis dudit dispositif et au moins une partie mobile dans un entrefer de la partie fixe.

4. Dispositif selon la revendication 3, **caractérisé en ce que** ledit actionneur (7) comporte des moyens de liaison élastiques entre ladite partie fixe et ladite partie mobile.

5. Dispositif selon l'une quelconque des revendications 1 à 4, **caractérisé en ce qu'**il comporte une unité de pilotage configurée pour transmettre un signal de commande commun aux deux actionneurs (7).

6. Dispositif selon la revendication 2 prise ensemble avec la revendication 5, **caractérisé en ce que** ledit signal de commande est émis sur une bande de fréquence prédéterminée, de sorte que le retour haptique généré soit homogène suivant la direction d'entraînement (D1) et suivant ladite direction (D2) perpendiculaire.

7. Dispositif selon la revendication 6, **caractérisé en ce que** ledit signal de commande est émis sur une fréquence sensiblement égale à 110 Hertz.

## Claims

1. Control device with a haptic feedback comprising:
- a base plate (3) having a parallelepipedal shape and being configured to transmit a haptic feedback to a user,
- a sensor (5) with a touch-sensitive surface supported by the said plate and configured to detect a pressure on the touch-sensitive surface,
- two actuators (7) attached to the said plate (3) with their drive axes (A1, A2) substantially parallel with each other and with a border (3a) of the said plate (3), the said actuators (7) being configured to drive the said plate (3) in translation in a common drive direction (D1) in the plane of the said plate (3) so as to generate the haptic feedback when a pressure is detected,
**characterized in that**:
- the two actuators (7) are placed diagonally on the said plate (3) on either side of the centre (C) of the said plate (3), so as to generate a two-way haptic feedback in the plane of the said plate (3), and **in that**
- the said control device comprises a force absorption means (9) placed between a frame of the said device and the said plate (3), the force absorption means comprising two elastic pads (9) attached to the said frame so as to be placed on the opposite diagonal from the two actuators (7).

2. Device according to Claim 1, **characterized in that** the two-way haptic feedback is generated in the common drive direction (D1) and in a direction (2) perpendicular to the common drive direction (D1), in the plane of the said plate (3).

3. Device according to any one of Claims 1 and 2, **characterized in that** it comprises at least one electromagnetic actuator (7) comprising a fixed portion connected to the frame of the said device and at least one movable portion in an air gap of the fixed portion.

4. Device according to Claim 3, **characterized in that** the said actuator (7) comprises means of elastic connection between the said fixed portion and the said movable portion.

5. Device according to any one of Claims 1 to 4, **characterized in that** it comprises a control unit configured to transmit a common control signal to the two actuators (7).

6. Device according to Claim 2 taken together with Claim 5, **characterized in that** the said control signal is transmitted on a predetermined frequency band so that the haptic feedback generated is homogenous in the drive direction (D1) and in the said perpendicular direction (D2).

7. Device according to Claim 6, **characterized in that** the said control signal is transmitted on a frequency substantially equal to 110 Hertz.

## Patentansprüche

1. Steuervorrichtung mit haptischer Rückmeldung, die enthält:
- eine Trägerplatte (3), die eine parallelepipedische Form hat und konfiguriert ist, um eine haptische Rückmeldung an einen Nutzer zu übertragen,
- einen Sensor (5) mit berührungsempfindlicher Fläche, der von der Platte getragen wird und konfiguriert ist, um einen Druck auf die berührungsempfindliche Fläche zu erfassen,
- zwei an der Platte (3) befestigte Stellantriebe (7), deren Antriebsachsen (A1, A2) im Wesentlichen parallel zueinander und zu einem Rand (3a) der Platte (3) sind, wobei die Stellantriebe (7) konfiguriert sind, um die Platte (3) in Translationsbewegung entlang einer gemeinsamen Antriebsrichtung (D1) in der Ebene der Platte (3) anzutreiben, um die haptische Rückmeldung zu generieren, wenn ein Druck erfasst wird,
**dadurch gekennzeichnet, dass**:
- die zwei Stellantriebe (7) diagonal auf der Platte (3) zu beiden Seiten der Mitte (C) der Platte (3) angeordnet sind, um eine bidirektionale haptische Rückmeldung in der Ebene der Platte (3) zu generieren, und dass
- die Steuervorrichtung eine Lastaufnahmeeinrichtung (9) aufweist, die zwischen einem Gestell der Vorrichtung und der Platte (3) angeordnet ist, wobei die Lastaufnahmeeinrichtung zwei elastische Blöcke (9) aufweist, die so an dem Gestell befestigt sind, dass sie auf der bezüglich der zwei Stellantriebe (7) entgegengesetzten Diagonale angeordnet sind.

2. Vorrichtung nach Anspruch 1, **dadurch gekennzeichnet, dass** die bidirektionale haptische Rückmeldung gemäß der gemeinsamen Antriebsrichtung (D1) und gemäß einer Richtung (D2) lotrecht zur gemeinsamen Antriebsrichtung (D1) in der Ebene der Platte (3) generiert wird.

3. Vorrichtung nach einem der Ansprüche 1 oder 2, **dadurch gekennzeichnet, dass** sie mindestens einen elektromagnetischen Stellantrieb (7) aufweist, der einen ortfesten, mit dem Gestell der Vorrichtung verbundenen Teil und mindestens einen beweglichen Teil in einer Spalte des ortsfesten Teils aufweist.

4. Vorrichtung nach Anspruch 3, **dadurch gekennzeichnet, dass** der Stellantrieb (7) elastische Verbindungseinrichtungen zwischen dem ortsfesten Teil und dem beweglichen Teil aufweist.

5. Vorrichtung nach einem der Ansprüche 1 bis 4, **dadurch gekennzeichnet, dass** sie eine Steuereinheit aufweist, die konfiguriert ist, um ein gemeinsames Steuersignal an die zwei Stellantriebe (7) zu übertragen.

6. Vorrichtung nach Anspruch 2 zusammen mit Anspruch 5, **dadurch gekennzeichnet, dass** das Steuersignal in einem vorbestimmten Frequenzband gesendet wird, so dass die generierte haptische Rückmeldung gemäß der Antriebsrichtung (D1) und gemäß der lotrechten Richtung (D2) homogen ist.

7. Vorrichtung nach Anspruch 6, **dadurch gekennzeichnet, dass** das Steuersignal auf einer Frequenz im Wesentlichen gleich 110 Hertz gesendet wird.
